# FASCICULE DE BREVET EUROPEEN

(11) **EP 3 028 356 B1**
(45) Date de publication et mention de la délivrance du brevet: **17.11.2021**
(21) Numéro de dépôt: 14748256.6
(22) Date de dépôt: 29.07.2014
(51) Int. Cl.: H02H 7/06, H02H 3/05, H02H 3/20, H02P 9/10, H02P 9/48, H02P 27/10, B60L 50/10

(54) **SYSTÈME DE GESTION D'UNE TENSION D'ALIMENTATION D'UN RÉSEAU ÉLECTRIQUE DE BORD DE VÉHICULE AUTOMOBILE**
SYSTEM ZUR VERWALTUNG EINER VERSORGUNGSSPANNUNG EINES STROMNETZES AN BORD EINES KRAFTFAHRZEUGS
SYSTEM FOR MANAGING A SUPPLY VOLTAGE OF AN ONBOARD ELECTRICAL NETWORK OF A MOTOR VEHICLE

(30) Priorité: 02.08.2013 FR 1357725
(43) Date de publication de la demande: 08.06.2016
(73) Titulaire: Valeo Equipements Electriques Moteur, 94046 Créteil Cedex (FR)
(72) Inventeur: TISSERAND, Pierre, F-94450 Limeil Brevannes (FR); CHASSARD, Pierre, F-94000 Creteil (FR); DE LAMARRE, Laurent, F-75020 Paris (FR); ARROU, Thibault, F-94046 Creteil Cedex (FR)
(86) Numéro de dépôt international: PCT/FR2014/051965
(87) Numéro de publication internationale: WO 2015/015115

(56) Documents cités:
- EP-A2- 2 482 445
- GB-A- 2 246 254
- US-B1- 6 294 899
- None

## Description

### DOMAINE TECHNIQUE DE L'INVENTION.

La présente invention concerne un système de gestion d'une tension d'alimentation d'un réseau électrique de bord de véhicule automobile.

L'invention concerne également un alternateur de véhicule automobile comprenant un tel système.

### ARRIERE PLAN TECHNOLOGIQUE DE L'INVENTION.

Les alternateurs présents sur toutes les voitures ont une boucle de régulation qui permet de maintenir la tension du réseau électrique de bord à environ 14 V.

Néanmoins, les régulateurs d'alternateurs incluent parfois des fonctions dites de protection, comme la détection de surtensions du réseau de bord (> 18V).

Certain régulateurs coupent la génération de courant de l'alternateur, tandis que d'autres alertent le conducteur en allumant un voyant rouge sur le tableau de bord afin d'arrêter le véhicule et le moteur au plus vite.

Quand une surtension est détectée par le régulateur de l'alternateur, l'excitation doit être coupée afin de protéger les équipements contre la surtension qui pourrait endommager à la fois la batterie et les composants connectés.

Dans la plupart des régulateurs actuels, cette fonction est réalisée par un traitement sur le signal sortant du convertisseur analogique numérique (CAN). Sur les régulateurs plus anciens, dit « analogiques », cette fonction est réalisée sur les petits signaux de la boucle de régulation, ce qui est quasi équivalent aux solutions numériques précitées.

Or toute la chaîne d'acquisition et les moyens de traitement numérique sont dans le chemin de cette détection; on parle alors de mode commun sur ces fonctions.

En cas de problème, de défaillance dans ce mode commun, le régulateur pourrait ne pas détecter cette surtension et concourir à une surcharge de la batterie pouvant la détériorer, ainsi que les équipements connectés à ses bornes.

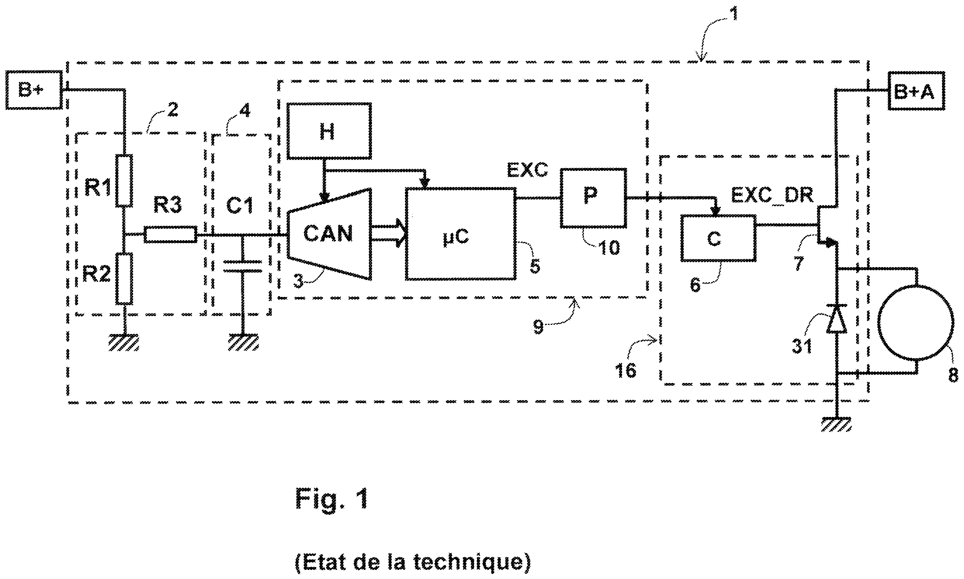

La **Figure 1** montre un schéma générique de ces régulateurs connus de l'état de la technique.

Par exemple, si des résistances R1, R2 ou R3 du détecteur dérivent et augmentent de valeur au point de générer des surtensions, si une capacité C1 du filtre se met en court-circuit, le convertisseur analogique numérique CAN délivre des données erronées plus basses que la valeur attendue, et même si l'horloge H se bloque avec une commande « ON », l'architecture ne peut détecter ses propres fautes car elles sont dites dans le mode commun. Toutes les fonctions du régulateur, jusqu'au MOSFET de puissance commutant le courant d'excitation de l'alternateur, sont potentiellement concernées par ce problème lié au mode commun.

En conclusion, dans l'état de la technique, la détection de surtension est conçue sur le principe que le régulateur n'a pas de défaillance.

Or la tension sur le réseau de bord dépend aussi des éléments du régulateur qui peuvent avoir des défaillances.

Des systèmes de gestion d'une tension d'alimentation comprenant un dispositif de régulation de type numérique de ladite tension d'alimentation et un dispositif de protection contre les surtensions dudit réseau électrique de bord contrôlant conjointement une excitation d'un alternateur alimentant ledit réseau électrique de bord sont divulgués dans les documents GB 2 246 254 A, EP 2 482 445 A2 et US 6 294 899 B1.

### DESCRIPTION GENERALE DE L'INVENTION.

La présente invention vise donc à pallier ces inconvénients.

Elle a précisément pour objet un système de gestion d'une tension d'alimentation d'un réseau électrique de bord de véhicule automobile selon revendication 1.

Ce système est du type de ceux connus en soi qui comprend un dispositif de régulation de type numérique de la tension d'alimentation et un dispositif de protection contre les surtensions du réseau électrique de bord.

Dans ce type de systèmes, le dispositif de régulation et le dispositif de protection contrôlent conjointement une excitation d'un alternateur alimentant le réseau électrique de bord.

Conformément à l'invention, le dispositif de protection est distinct du dispositif de régulation.

Dans ce système, un signal de surtension généré par le dispositif de protection et contrôlant l'excitation est prioritaire sur un signal d'excitation généré par le dispositif de régulation.

Selon une forme de réalisation particulière, le dispositif de protection comprend:
- des premiers moyens d'acquisition de la tension d'alimentation et/ou d'une tension de batterie aux bornes d'une batterie reliée au réseau électrique de bord;
- des moyens de comparaison de la tension d'alimentation et/ou de la tension de batterie respectivement à une première tension de référence et/ou une seconde tension de référence;

- des moyens d'intégration d'un signal de sortie des moyens de comparaison;
- des moyens d'interface générant le signal de surtension à partir du signal de sortie intégré.

Selon une caractéristique particulière, les moyens de comparaison présentent une hystérésis.

Selon une autre caractéristique particulière, les premiers moyens d'acquisition comprennent des premiers moyens de capture de la tension d'alimentation et/ou de la tension de batterie, et des premiers moyens de filtrage.

Les moyens d'intégration comprennent préférentiellement un registre à décalage piloté par une première horloge.

Selon une autre caractéristique particulière, le dispositif de protection comprend un commutateur de protection à semi-conducteur apte à ouvrir le circuit d'excitation de l'alternateur sur commande du signal de surtension et comprend en outre une alimentation électrique dédiée.

Le système de gestion d'une tension d'alimentation d'un réseau électrique de bord de véhicule automobile selon l'invention comprend en outre un circuit de puissance comportant un commutateur d'excitation à semi-conducteur apte à commuter un circuit d'excitation de l'alternateur et commandé par un signal de commande généré par des moyens de validation du signal d'excitation par le signal de surtension.

Selon une forme de réalisation particulière, le dispositif de régulation comprend :
- des seconds moyens d'acquisition de la tension de batterie;
- une boucle de régulation, par exemple de type numérique, générant le signal d'excitation en fonction de la tension de batterie.

Selon une caractéristique particulière, ces seconds moyens d'acquisition comprennent des seconds moyens de capture de la tension de batterie comprenant un pont de résistances et des seconds moyens de filtrage comprenant une capacité.

Selon une autre caractéristique particulière, la boucle de régulation numérique comprend, pilotés par une seconde horloge, un convertisseur analogique numérique en sortie des seconds moyens de filtrage et un microcontrôleur, circuit de logique câblée ou analogue, en sortie du convertisseur analogique numérique.

Selon une forme de réalisation particulière du système de gestion selon l'invention, le dispositif de régulation et le dispositif de protection sont réalisés sous la forme de deux blocs électroniques distincts sur des substrats séparés.

L'invention concerne aussi un alternateur de véhicule automobile remarquable en ce qu'il comprend le système de gestion d'une tension d'alimentation d'un réseau électrique de bord de véhicule automobile décrit ci-dessus.

Ces quelques spécifications essentielles auront rendu évidents pour l'homme de métier les avantages apportés par l'invention par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

La **Figure 1** est un schéma de principe d'un système de gestion d'une tension d'alimentation d'un réseau électrique de bord de véhicule automobile connu de l'état de la technique, comprenant un dispositif de protection contre les surtensions intégré au dispositif de régulation.
La **Figure 2** est un schéma synoptique d'un dispositif de protection contre les surtensions distinct du dispositif de régulation selon l'invention.
La **Figure 3** est un diagramme de temps du signal de surtension généré par le dispositif de protection montré sur la **Figure 2****.**
La **Figure 4** est un schéma de principe d'un mode de réalisation d'un système de gestion d'une tension d'alimentation d'un réseau électrique de bord de véhicule automobile selon l'invention.
La **Figure 5** est un schéma détaillé d'un mode de réalisation particulier du dispositif de protection montré sur la **Figure 2****.**
La **Figure 6** est un schéma détaillé d'un mode de réalisation d'un circuit de puissance du système de gestion d'une tension d'alimentation d'un réseau électrique de bord de véhicule automobile montré sur la **Figure 4****.**
La **Figure 7** est un schéma de principe d'un autre mode de réalisation d'un système de gestion d'une tension d'alimentation d'un réseau électrique de bord de véhicule automobile distinct du mode de réalisation selon l'invention.

### DESCRIPTION DES MODES DE REALISATION PREFERES DE L'INVENTION.

Ainsi que cela a été indiqué en préambule, la **Figure 1** montre une architecture générique d'un système de gestion 1 d'une tension d'alimentation B+A d'un réseau électrique de bord de véhicule automobile.

Un alternateur alimente ce réseau sous la tension d'alimentation B+A aux fins de charger une batterie qui est reliée au réseau.

Une tension de batterie B+, après avoir été ramenée à un niveau compatible 2 avec un convertisseur analogique numérique 3, est filtrée 4 et échantillonnée avant traitement par une unité de traitement 5.

Cette unité de traitement 5, le plus souvent constituée d'un microcontrôleur ou d'un microprocesseur, voire d'un circuit en logique câblée, élabore un signal d'excitation EXC modulé en largeur d'impulsion commandant, après amplification 6, un commutateur d'excitation à semi-conducteur 7, sous la forme d'un transistor MOSFET, en série dans un circuit d'excitation 8 de l'alternateur, c'est-à-dire habituellement la bobine rotorique.

Un rapport cyclique du signal d'excitation EXC est déterminé par l'unité de traitement 5 de manière à contrôler la tension d'alimentation B+A du réseau fournie par l'alternateur afin de maintenir la tension de batterie B+ à une tension nominale.

Dans le système de gestion 1 générique connu montré sur la **Figure 1****,** la boucle de régulation numérique 9 comprend, entre l'unité de traitement 5 et l'amplificateur d'attaque 6 (également appelé « driver » en anglais) commandant le commutateur d'excitation 7, un dispositif de protection intégré 10 contre les surtensions aux bornes de la batterie, qui analyse les signaux transmis.

En cas de défaillance de la boucle de régulation numérique 9, le dispositif de protection intégré 10 n'est plus fonctionnel.

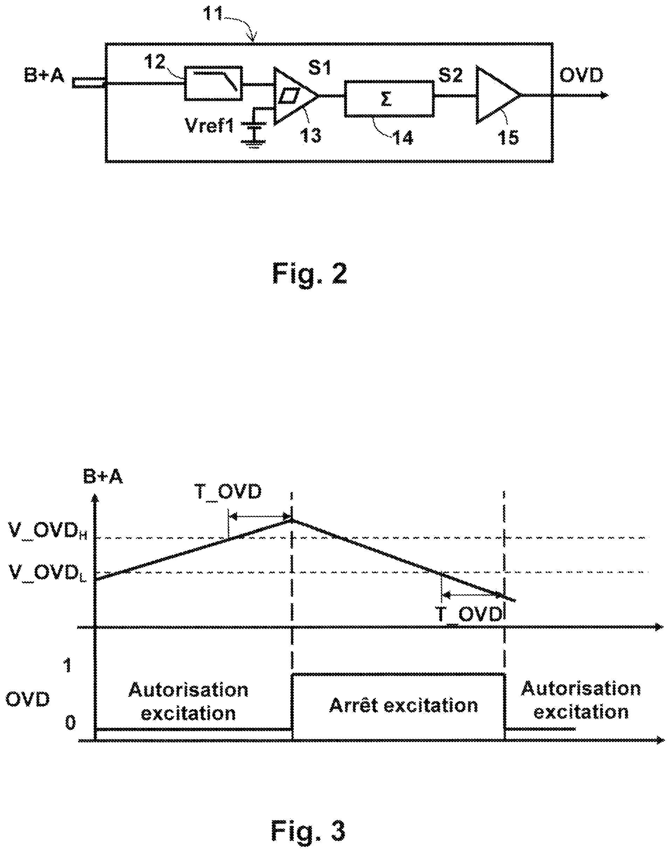

La **Figure 2** montre au contraire un dispositif de protection 11 contre les surtensions distinct du dispositif de régulation 2, 4, 9, 6 et notamment de la boucle de régulation numérique 9.

Ce dispositif de protection 11, dans un premier mode de réalisation de l'invention, comprend:
- des premiers moyens d'acquisition 12 qui capturent et filtrent la tension d'alimentation B+A fournie par l'alternateur alimentant le réseau électrique de bord du véhicule;
- des moyens de comparaison 13 de cette tension d'alimentation B+A avec une première tension de référence Vref1 ;
- des moyens d'intégration 14 du signal de sortie S1 des moyens de comparaison 13;
- des moyens d'interface 15 générant, à partir du signal de sortie intégré S2, un signal de surtension OVD qui indique un dépassement par la tension d'alimentation B+A de la première tension de référence Vref1.

Les moyens de comparaison 13 présentent une hystérésis, c'est-à-dire, comme le montre bien la **Figure 3****,** que la tension d'alimentation B+A doit dépasser sensiblement la première tension de référence Vref1 jusqu'à atteindre un seuil haut V_OVD__{H} pour que le signal de surtension OVD soit actif.

Inversement, le signal de surtension OVD n'est désactivé que si la tension d'alimentation B+A baisse sensiblement en dessous de la première tension de référence Vref1 jusqu'à un seuil bas V_OVD__{L}.

Les moyens d'intégration 14 imposent de plus que la tension d'alimentation B+A reste en dessus du seuil haut V_OVD__{H}, ou reste en dessous du seuil bas V_OVD__{L}, pendant une durée plus longue qu'un délai prédéterminé T_OVD pour que le signal de surtension OVD bascule d'un état à l'autre.

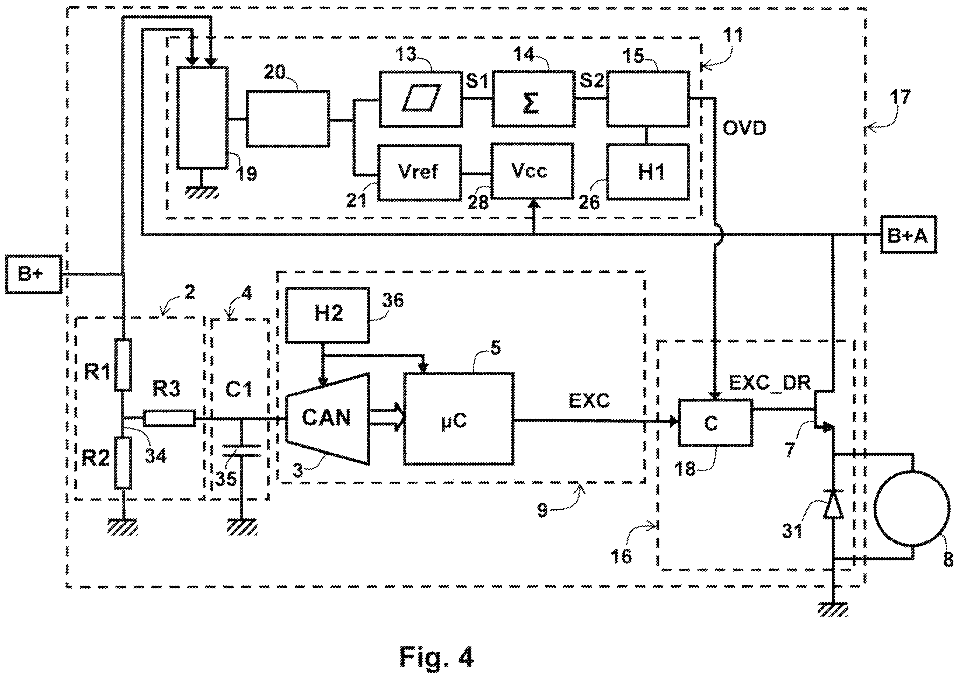

La **Figure 4** montre bien comment agit le signal de surtension OVD sur le circuit de puissance 16 qui comporte le commutateur d'excitation 7 (MOSFET de puissance) commutant l'excitation de l'alternateur dans le système de gestion 17 selon l'invention, en fonction d'un signal de commande EXC_DR.

Le signal de surtension OVD est prioritaire sur le signal d'excitation EXC généré par la boucle de régulation numérique 9 (qui ne comporte donc pas dispositif de protection contre les surtensions), c'est-à-dire que le signal d'excitation EXC est validé, ou non, par des moyens de validation 18 en fonction du signal de surtension OVD.

Quand le signal de surtension OVD n'est pas actif (pas de surtension détectée), la boucle de régulation 9 contrôle normalement l'excitation de l'alternateur, et le signal de commande EXC_DR est identique au signal d'excitation EXC.

Quand le signal de surtension OVD est actif (surtension détectée), le signal d'excitation EXC est remplacé par ce signal de surtension OVD, c'est-à-dire que le signal de commande EXC_DR devient identique au signal de surtension OVD de sorte que l'excitation de l'alternateur est arrêtée selon le diagramme de temps montré sur la **Figure 3****.**

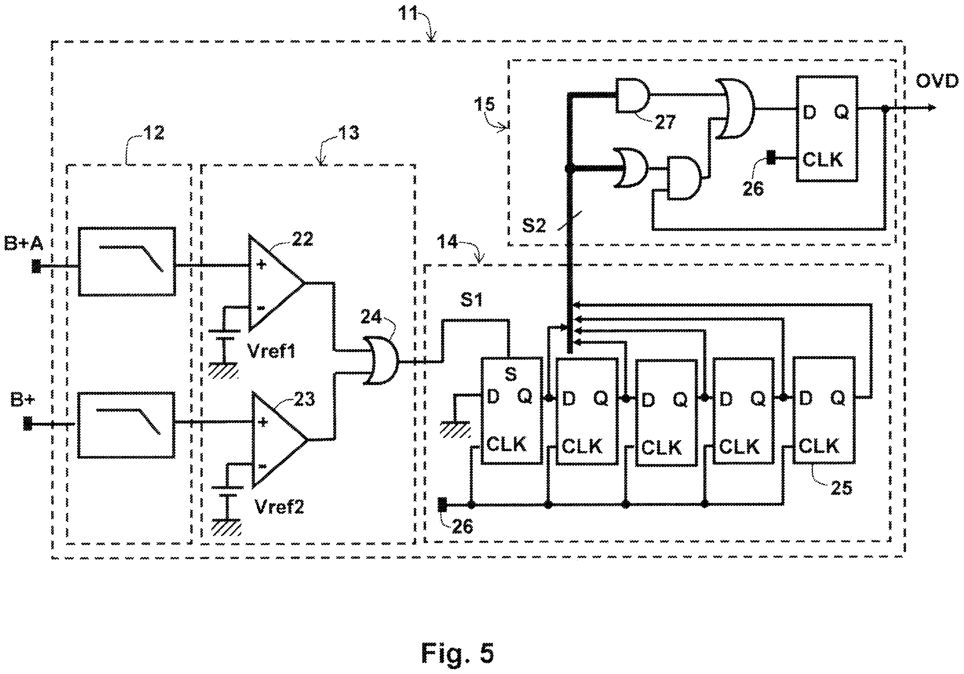

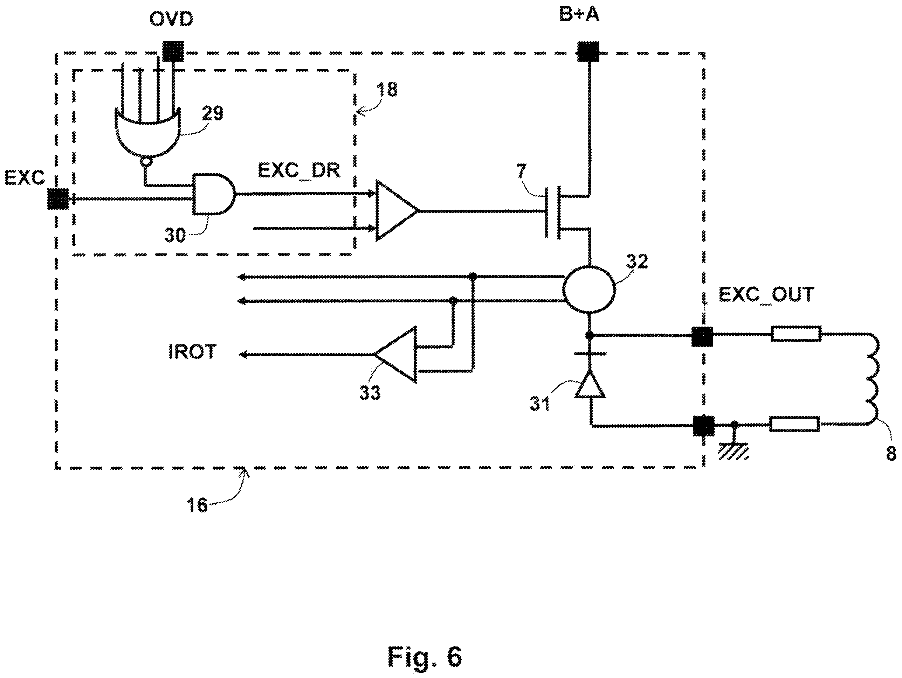

Le fonctionnement du dispositif de protection 11 et du circuit de puissance 16 sera précisé en liaison avec les **Figures 5** **et** **6** montrant en détail un second mode de réalisation particulier du système de gestion 17 selon l'invention, dont le schéma de principe est montré sur la **Figure 4****.**

Dans ce second mode de réalisation, le système de gestion 17 d'une tension d'alimentation B+A d'un réseau électrique de bord d'un véhicule automobile comprend un dispositif de protection 11 contre les surtensions qui gère la tension d'alimentation B+A présente aux bornes de l'alternateur et également la tension de batterie B+.

Des premiers moyens de capture 19 permettent de ramener la tension d'alimentation B+A et la tension de batterie B+ à des niveaux compatibles avec les composants électroniques, notamment numériques, du dispositif de protection 11 avant leur filtrage par des premiers moyens de filtrage 20.

Des moyens de comparaison 13 avec hystérésis permettent de comparer respectivement la tension d'alimentation B+A et la tension de batterie B+, ou plus exactement des tensions proportionnelles, à la première tension de référence Vref1 et à une seconde tension de référence Vref2 fournies par un générateur de tension de référence 21, et de générer un signal de sortie S1 représentatif d'un dépassement de l'une ou de l'autre de ces valeurs Vref1, Vref2.

Ces moyens de comparaison 13 dans ce second mode de réalisation particulier de l'invention sont bien montrés sur la **Figure 5****.**

Ils sont constitués par deux comparateurs 22, 23 recevant sur leurs entrées non-inverseuses les tensions proportionnelles à la tension d'alimentation B+A et à la tension de batterie B+ fournies par les premiers moyens d'acquisition 12 que constituent les premiers moyens de capture 19 et les premiers moyens de filtrage 20, et sur leurs entrées inverseuses les première et seconde tensions de références Vref1, Vref2.

Les sorties de ces comparateurs 22, 23 sont combinées par un OU logique 24 pour fournir le signal de sortie S1 à l'entrée des moyens d'intégration 14.

Comme le montre bien la **Figure 5****,** ces moyens d'intégration 14 sont constitués par un registre à décalage formé par plusieurs bascules D 25 qui échantillonnent et mémorisent le signal de sortie S1 à chaque période d'une première horloge 26.

Seul un signal de sortie S1 maintenu actif pendant plusieurs périodes consécutives génère un signal de sortie intégré S2, sous la forme d'un vecteur dont toutes les composantes sont actives, qui est susceptible de produire en sortie des moyens d'interface 15, comprenant notamment un ET logique à plusieurs entrées 27, un signal de surtension OVD actif.

Le dispositif de protection 11 selon l'invention comprend une alimentation électrique 28 dédiée pour ne pas dépendre du dispositif de régulation 2, 4, 9,16.

Cette alimentation électrique 28 alimente notamment le générateur de tension de référence 21.

Le circuit de puissance 16 de ce second mode de réalisation du système de gestion 17 d'une tension d'alimentation B+A d'un réseau électrique de bord d'un véhicule automobile, mais également du premier mode de réalisation, est montré en détail sur la **Figure 6****.**

Les moyens de validation 18 comprennent un NON-OU logique à plusieurs entrées 29, attaqué par le signal de surtension OVD généré par le dispositif de protection 11 et d'autres signaux de service.

La sortie de cette porte 29 est combinée avec le signal d'excitation EXC dans une autre porte 30 réalisant une fonction ET pour produire le signal de commande EXC_DR du commutateur d'excitation 7.

De la sorte, la sortie EXC_DR de cette autre porte 30 est identique au signal d'excitation EXC quand le signal de surtension OVD est inactif, les autres signaux de service étant aussi inactifs.

Quand le signal de surtension OVD est actif, quel que soit l'état des autres signaux de service, la sortie de la porte 29 est inactive et le signal de commande EXC_DR en sortie de l'autre porte 30 est inactif, quel que soit le signal d'excitation EXC fourni par la boucle de régulation numérique 9, ce qui interrompt l'excitation EXC_OUT de l'alternateur.

Il est à noter que le circuit de puissance 16 du système de gestion 17 d'une alimentation B+A d'un réseau électrique de bord d'un véhicule automobile selon l'invention ne diffère d'un circuit de puissance 16 d'un système de gestion 1 générique connu, tel que celui montré sur la **Figure 1****,** que par deux portes logiques 29, 30.

La commutation du courant d'excitation est réalisée par un commutateur d'excitation 7 de type MOSFET, et le retour de masse comporte une diode de roue libre 31.

Une mesure du courant d'excitation IROT est réalisée au moyen d'un shunt 32 aux bornes duquel est mesurée une différence de potentiel par un amplificateur opérationnel 33.

Le dispositif de régulation 2, 4, 9, 16 du système 17 de gestion d'une alimentation d'un réseau électrique de bord d'un véhicule automobile selon l'invention reprend également les mêmes éléments qu'un dispositif de régulation 2, 4, 9, 16 d'un système 1 générique connu, comme le montre la **Figure 4****:**
- des seconds moyens d'acquisition 2, 4 de la tension de batterie B+ comprenant des seconds moyens de capture 2 constitués au moins par un pont de résistances 34 et des seconds moyens de filtrage 4 constitués par au moins une capacité 35;
- une boucle de régulation numérique 9 comprenant un convertisseur numérique analogique 3 et une unité de traitement 5, constituée d'un microcontrôleur ou d'un microprocesseur;
- une seconde horloge 36;

La différence essentielle est que la boucle de régulation 9 du système 17 selon l'invention ne comprend pas de dispositif de protection intégré 10 pour éviter tout mode commun de fonctions.

Pour la même raison, la première horloge 26 du dispositif de protection 11 est distincte de la seconde horloge 36 de la boucle de régulation 9.

Le système de gestion 17 d'une tension alimentation B+A d'un réseau électrique de bord d'un véhicule automobile selon l'invention est réalisé sous la forme d'un ASIC.

Du fait de cette modularité, et du fait que le dispositif de régulation 2, 4, 9, 16 est peu différent des dispositifs de régulation antérieurs 2, 4, 9, 10,16, et même simplifié, le développement du nouvel ASIC ne demande que des investissements réduits.

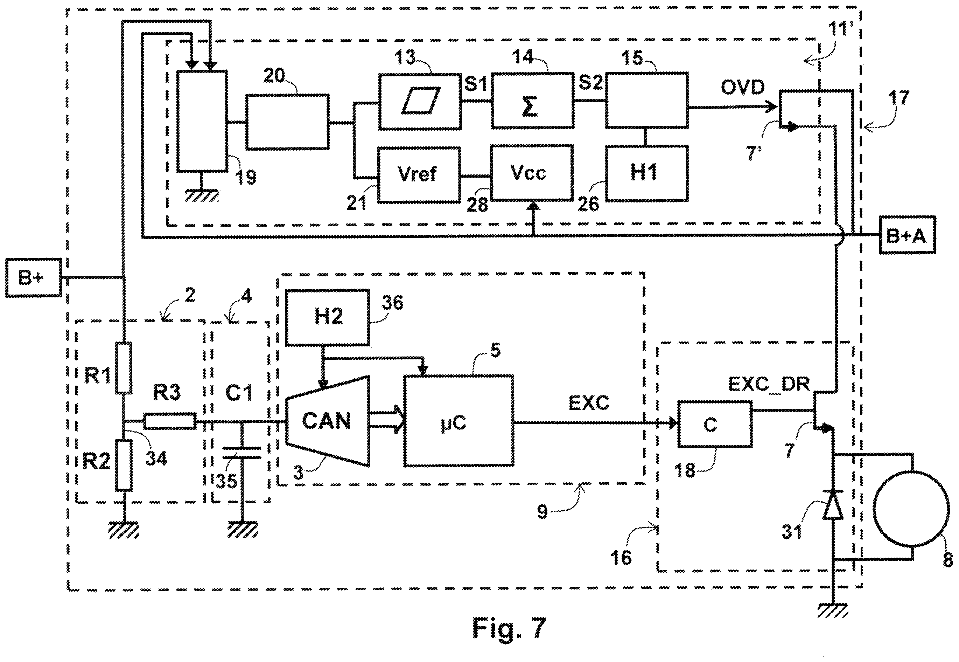

La **Figure 7** montre un autre mode de réalisation du système de gestion d'une tension d'alimentation d'un réseau électrique de bord de véhicule automobile distinct du mode de réalisation selon l'invention. Dans ce mode de réalisation, le dispositif de protection, désigné ici 11', comporte son propre commutateur de puissance à semi-conducteur (transistor MOSFET) 7'. Ce commutateur 7' est un commutateur de protection apte à ouvrir le circuit d'excitation de l'alternateur sur commande du signal OVD et s'intercale en série entre la tension d'alimentation B+A et le commutateur d'excitation 7 du circuit 16.

Le mode de réalisation selon la **Figure 7** apporte davantage de séparation entre le dispositif de protection 11' et le reste du régulateur et donne au dispositif de protection 11' la possibilité de couper le courant d'excitation de l'alternateur indépendamment du commutateur d'excitation 7, ce qui présente un intérêt majeur par exemple dans le cas d'un commutateur d'excitation 7 défaillant, en court-circuit, avec un courant d'excitation maximal dans la bobine d'excitation de l'alternateur. Ce mode de réalisation se prête bien à la réalisation du dispositif de protection 11' sur un substrat séparé, distinct de celui sur lequel est implanté le reste du régulateur, ce qui renforce sa fonction de protection en autorisant une meilleure résistance à un éventuel sur-échauffement du régulateur suite par exemple à une destruction thermique du commutateur d'excitation 7. L'alimentation électrique dédiée 28 renforce également cette séparation entre le dispositif de protection 11' et le reste du régulateur.

Un alternateur comprenant le système de gestion 17 selon l'invention bénéficie donc d'un avantage concurrentiel certain par rapport aux modèles antérieurs, puisque pour un coût comparable, la protection contre les surtensions est rendue absolue.

Comme il va de soi, l'invention ne se limite pas aux seuls modes d'exécution préférentiels décrits ci-dessus.

Les types des composants électroniques cités ne sont aussi que des exemples d'implémentation. Ils sont alternativement remplacés autant que de besoin par d'autres composants réalisant les mêmes fonctions ou les mêmes groupes de fonctions.

L'invention embrasse donc toutes les variantes possibles de réalisation qui resteraient dans le cadre défini par les revendications ci-après.

## Revendications

1. Système de gestion (17) d'une tension d'alimentation (B+A) d'un réseau électrique de bord de véhicule automobile du type de ceux comprenant un dispositif de régulation (9) de ladite tension d'alimentation (B+A) et un dispositif de protection (11) contre les surtensions dudit réseau électrique de bord contrôlant conjointement une excitation d'un alternateur alimentant ledit réseau électrique de bord, où ledit dispositif de protection (11) est distinct dudit dispositif de régulation (9) et où un signal de surtension (OVD) généré par ledit dispositif de protection (11) et contrôlant ladite excitation est prioritaire sur un signal d'excitation (EXC) généré par ledit dispositif de régulation (9),
le système **caractérisé en ce que** le dispositif de régulation est de type numérique et **en ce que** ledit système comprend en outre un circuit de puissance (16) comportant un commutateur d'excitation à semi-conducteur (7) apte à commuter un circuit d'excitation (8) dudit alternateur et commandé par un signal de commande (EXC_DR) généré par des moyens de validation (18) dudit signal d'excitation (EXC) par ledit signal de surtension (OVD).

2. Système de gestion (17) d'une tension d'alimentation (B+A) d'un réseau électrique de bord de véhicule automobile selon la revendication 1, **caractérisé en ce que** ledit dispositif de protection (11) comprend:
- des premiers moyens d'acquisition (12) de ladite tension d'alimentation (B+A) et/ou d'une tension de batterie (B+) aux bornes d'une batterie reliée audit réseau électrique de bord;
- des moyens de comparaison (13) de ladite tension d'alimentation (B+A) et/ou de ladite tension de batterie (B+) respectivement à une première tension de référence (Vref1) et/ou une seconde tension de référence (Vref2);
- des moyens d'intégration (14) d'un signal de sortie (S1) desdits moyens de comparaison (13);
- des moyens d'interface (15) générant ledit signal de surtension (OVD) à partir dudit signal de sortie intégré (S2).

3. Système de gestion (17) d'une tension d'alimentation (B+A) d'un réseau électrique de bord de véhicule automobile selon la revendication 2, **caractérisé en ce que** lesdits moyens de comparaison (13) présentent une hystérésis.

4. Système de gestion (17) d'une tension d'alimentation (B+A) d'un réseau électrique de bord de véhicule automobile selon l'une des revendications 2 ou 3, **caractérisé en ce que** lesdits premiers moyens d'acquisition (12) comprennent des premiers moyens de capture (19) de ladite tension d'alimentation (B+A) et/ou de ladite tension de batterie (B+), et des premiers moyens de filtrage (20).

5. Système de gestion (17) d'une tension d'alimentation (B+A) d'un réseau électrique de bord de véhicule automobile selon l'une des revendications 2 ou 3, **caractérisé en ce que** lesdits moyens d'intégration (13) comprennent un registre à décalage (25) piloté par une première horloge (26).

6. Système de gestion (17) d'une tension d'alimentation (B+A) d'un réseau électrique de bord de véhicule automobile selon l'une des revendications 2 ou 3, **caractérisé en ce que** ledit dispositif de régulation (9) comprend:
- des seconds moyens d'acquisition (2, 4) de ladite tension de batterie (B+);
- une boucle de régulation numérique (9) générant ledit signal d'excitation (EXC) en fonction de ladite tension de batterie (B+).

7. Système de gestion (17) d'une tension d'alimentation (B+A) d'un réseau électrique de bord de véhicule automobile selon la revendication 6, **caractérisé en ce que** lesdits seconds moyens d'acquisition (2, 4) comprennent des seconds moyens de capture (2) de ladite tension de batterie (B+) constitués par au moins un pont de résistances (34) et des seconds moyens de filtrage (4) constitués par au moins une capacité (35).

8. Système de gestion (17) d'une tension d'alimentation (B+A) d'un réseau électrique de bord de véhicule automobile selon la revendication 6, **caractérisé en ce que** ladite boucle de régulation numérique (9) comprend, pilotés par une seconde horloge (36), un convertisseur analogique numérique (3) en sortie desdits seconds moyens de filtrage (4) et un microcontrôleur (5), circuit de logique câblée ou analogue, en sortie dudit convertisseur analogique numérique (3).

9. Système de gestion (17) d'une tension d'alimentation (B+A) d'un réseau électrique de bord de véhicule automobile selon l'une quelconque des revendications 1 à 8 précédentes, **caractérisé en ce que** ledit dispositif de régulation (9) et ledit dispositif de protection (11) sont réalisés sous la forme de deux blocs électroniques distincts sur des substrats séparés.

10. Alternateur de véhicule automobile, **caractérisé en ce qu'**il comprend un système de gestion (17) d'une tension d'alimentation (B+A) d'un réseau électrique de bord de véhicule automobile selon l'une quelconque des revendications 1 à 10 précédentes.

## Patentansprüche

1. System zur Verwaltung (17) einer Versorgungsspannung (B+A) eines Bordstromnetzes eines Kraftfahrzeugs vom Typ derjenigen, die eine Vorrichtung zur Regelung (9) der Versorgungsspannung (B+A) und eine Schutzvorrichtung (11) gegen Überspannungen des Bordstromnetzes umfassen, die zusammen eine Erregung eines Wechselstromgenerators steuern, der das Bordstromnetz versorgt, wobei die Schutzvorrichtung (11) von der Regelungsvorrichtung (9) gesondert ist und wobei ein Überspannungssignal (OVD), das von der Schutzvorrichtung (11) erzeugt wird und die Erregung steuert, vor einem Erregungssignal (EXC), das von der Regelungsvorrichtung (9) erzeugt wird, Vorrang hat, wobei das System **dadurch gekennzeichnet ist, dass** die Regelungsvorrichtung digitalen Typs ist, und dadurch, dass das System ferner eine Leistungsschaltung (16) umfasst, die einen Halbleiter-Erregungsschalter (7) aufweist, der geeignet ist, eine Erregungsschaltung (8) des Wechselstromgenerators umzuschalten, und von einem Steuersignal (EXC_DR) gesteuert wird, das von Mitteln zur Validierung (18) des Erregungssignals (EXC) durch das Überspannungssignal (OVD) erzeugt wird.

2. System zur Verwaltung (17) einer Versorgungsspannung (B+A) eines Bordstromnetzes eines Kraftfahrzeugs nach Anspruch 1, **dadurch gekennzeichnet, dass** die Schutzvorrichtung (11) Folgendes umfasst:
- erste Mittel zur Erfassung (12) der Versorgungsspannung (B+A) und/oder einer Batteriespannung (B+) an den Anschlüssen einer Batterie, die mit dem Bordstromnetz verbunden ist;
- Mittel zum Vergleichen (13) der Versorgungsspannung (B+A) und/oder der Batteriespannung (B+) jeweils mit einer ersten Referenzspannung (Vref1) und/oder einer zweiten Referenzspannung (Vref2);
- Mittel zur Integration (14) eines Ausgangssignals (S1) der Vergleichsmittel (13);
- Schnittstellenmittel (15), die das Überspannungssignal (OVD) anhand des integrierten Ausgangssignals (S2) erzeugen.

3. System zur Verwaltung (17) einer Versorgungsspannung (B+A) eines Bordstromnetzes eines Kraftfahrzeugs nach Anspruch 2, **dadurch gekennzeichnet, dass** die Vergleichsmittel (13) eine Hysterese umfassen.

4. System zur Verwaltung (17) einer Versorgungsspannung (B+A) eines Bordstromnetzes eines Kraftfahrzeugs nach einem der Ansprüche 2 oder 3, **dadurch gekennzeichnet, dass** die ersten Erfassungsmittel (12) erste Mittel zum Abgreifen (19) der Versorgungsspannung (B+A) und/oder der Batteriespannung (B+) und erste Filtermittel (20) umfassen.

5. System zur Verwaltung (17) einer Versorgungsspannung (B+A) eines Bordstromnetzes eines Kraftfahrzeugs nach einem der Ansprüche 2 oder 3, **dadurch gekennzeichnet, dass** die Integrationsmittel (13) ein Schieberegister (25) umfassen, das von einem ersten Taktgeber (26) gesteuert wird.

6. System zur Verwaltung (17) einer Versorgungsspannung (B+A) eines Bordstromnetzes eines Kraftfahrzeugs nach einem der Ansprüche 2 oder 3, **dadurch gekennzeichnet, dass** die Regelungsvorrichtung (9) Folgendes umfasst:
- zweite Mittel zur Erfassung (2, 4) der Batteriespannung (B+);
- eine digitale Regelschleife (9), die das Erregungssignal (EXC) in Abhängigkeit von der Batteriespannung (B+) erzeugt.

7. System zur Verwaltung (17) einer Versorgungsspannung (B+A) eines Bordstromnetzes eines Kraftfahrzeugs nach Anspruch 6, **dadurch gekennzeichnet, dass** die zweiten Erfassungsmittel (2, 4) zweite Mittel zum Abgreifen (2) der Batteriespannung (B+), die von mindestens einer Widerstandsbrücke (34) gebildet sind, und zweite Filtermittel (4), die von mindestens einer Kapazität (35) gebildet sind, umfassen.

8. System zur Verwaltung (17) einer Versorgungsspannung (B+A) eines Bordstromnetzes eines Kraftfahrzeugs nach Anspruch 6, **dadurch gekennzeichnet, dass** die digitale Regelschleife (9) einen Analog-DigitalWandler (3) am Ausgang der zweiten Filtermittel (4) und einen Mikrocontroller (5), kabelgebundene oder analoge Logikschaltung, am Ausgang des Analog-Digital-Wandlers (3) umfasst, die von einem zweiten Taktgeber (36) gesteuert werden.

9. System zur Verwaltung (17) einer Versorgungsspannung (B+A) eines Bordstromnetzes eines Kraftfahrzeugs nach einem der vorhergehenden Ansprüche 1 bis 8, **dadurch gekennzeichnet, dass** die Regelungsvorrichtung (9) und die Schutzvorrichtung (11) in Form zweier gesonderter elektronischer Blöcke auf getrennten Substraten ausgebildet sind.

10. Kraftfahrzeug-Wechselstromgenerator, **dadurch gekennzeichnet, dass** er ein System zur Verwaltung (17) einer Versorgungsspannung (B+A) eines Bordstromnetzes eines Kraftfahrzeugs nach einem der vorhergehenden Ansprüche 1 bis 10 umfasst.

## Claims

1. System (17) for managing a supply voltage (B+A) of an onboard electrical network of a motor vehicle, of the type comprising a regulation device (9) for regulating said supply voltage (B+A) and a protective device (11) for protecting against overvoltages of said onboard electrical network jointly controlling excitation of an alternator supplying said onboard electrical network, where said protective device (11) is distinct from said regulation device (9) and where an overvoltage signal (OVD) that is generated by said protective device (11) and controls said excitation takes priority over an excitation signal (EXC) that is generated by said regulation device (9), the system being **characterized in that** the regulation device is of digital type and **in that** said system further comprises a power circuit (16) comprising a semiconductor excitation switch (7) that is able to switch an excitation circuit (8) of said alternator and is controlled by a control signal (EXC_DR) that is generated by validation means (18) for validating said excitation signal (EXC) by way of said overvoltage signal (OVD).

2. System (17) for managing a supply voltage (B+A) of an onboard electrical network of a motor vehicle according to Claim 1, **characterized in that** said protective device (11) comprises:
- first acquisition means (12) for acquiring said supply voltage (B+A) and/or a battery voltage (B+) across the terminals of a battery that is connected to said onboard electrical network;
- comparison means (13) for comparing said supply voltage (B+A) and/or said battery voltage (B+) with a first reference voltage (Vref1) and/or a second reference voltage (Vref2), respectively;
- integration means (14) for integrating an output signal (S1) of said comparison means (13);
- interface means (15) generating said overvoltage signal (OVD) on the basis of said integrated output signal (S2).

3. System (17) for managing a supply voltage (B+A) of an onboard electrical network of a motor vehicle according to Claim 2, **characterized in that** said comparison means (13) exhibit a hysteresis.

4. System (17) for managing a supply voltage (B+A) of an onboard electrical network of a motor vehicle according to either of Claims 2 and 3, **characterized in that** said first acquisition means (12) comprise first capture means (19) for capturing said supply voltage (B+A) and/or said battery voltage (B+), and first filtering means (20).

5. System (17) for managing a supply voltage (B+A) of an onboard electrical network of a motor vehicle according to either of Claims 2 and 3, **characterized in that** said integration means (13) comprise a shift register (25) that is driven by a first clock (26).

6. System (17) for managing a supply voltage (B+A) of an onboard electrical network of a motor vehicle according to either of Claims 2 and 3, **characterized in that** said regulation device (9) comprises:
- second acquisition means (2, 4) for acquiring said battery voltage (B+);
- a digital control loop (9) generating said excitation signal (EXC) depending on said battery voltage (B+) .

7. System (17) for managing a supply voltage (B+A) of an onboard electrical network of a motor vehicle according to Claim 6, **characterized in that** said second acquisition means (2, 4) comprise second capture means (2) for capturing said battery voltage (B+) that are composed of at least one resistor bridge (34) and second filtering means (4) that are composed of at least one capacitor (35).

8. System (17) for managing a supply voltage (B+A) of an onboard electrical network of a motor vehicle according to Claim 6, **characterized in that** said digital control loop (9) comprises, driven by a second clock (36), an analogue-digital converter (3) at the output of said second filtering means (4) and a microcontroller (5), a hardwired logic circuit or the like, at the output of said analogue-digital converter (3).

9. System (17) for managing a supply voltage (B+A) of an onboard electrical network of a motor vehicle according to any one of the preceding Claims 1 to 8, **characterized in that** said regulation device (9) and said protective device (11) are produced in the form of two distinct electronic blocks on separate substrates.

10. Motor vehicle alternator, **characterized in that** it comprises a system (17) for managing a supply voltage (B+A) of an onboard electrical network of a motor vehicle according to any one of the preceding Claims 1 to 10.
